# EUROPEAN PATENT SPECIFICATION

(11) **EP 2 327 909 B1**
(45) Date of publication and mention of the grant of the patent: **22.04.2015**
(21) Application number: 09812968.7
(22) Date of filing: 03.08.2009
(51) Int. Cl.: F16J 15/32, F02M 25/07

(54) **SEALING DEVICE AND METHOD OF MOUNTING SAME**
DICHTUNGSVORRICHTUNG UND VERFAHREN ZU IHRER MONTAGE
DISPOSITIF D ÉTANCHÉITÉ ET PROCÉDÉ DE MONTAGE

(30) Priority: 09.09.2008 JP 2008230943
(43) Date of publication of application: 01.06.2011
(73) Proprietor: NOK Corporation, Minato-ku Tokyo 105-8585 (JP)
(72) Inventor: FURUYAMA, Hideyuki, Fukushima-shi Fukushima 960-1102 (JP); WATANABE, Tatsuhiko, Fukushima-shi Fukushima 960-1102 (JP)
(74) Representative: TBK
(86) International application number: PCT/JP2009/063720
(87) International publication number: WO 2010/029820

(56) References cited:
- EP-A1- 0 437 366
- DE-A1-102008 013 105
- DE-A1-102010 010 027
- JP-A- 2007 032 301
- JP-A- 2007 333 003
- JP-A- 2008 095 924
- JP-A- 2008 175 322
- JP-U- 2 018 970
- US-A1- 2007 017 491

## Description

### BACKGROUND OF THE INVENTION

### Field of the Invention

The present invention relates to a sealing device sealing a valve shaft periphery, and more particularly to a sealing device sealing a valve shaft periphery of a butterfly valve in an exhaust gas recirculation system (hereinafter, refer to as an EGR system) of a vehicle by a seal lip, and a mounting method of the same.

### Description of the Conventional Art

In the butterfly valve which is used in the EGR system of the vehicle, since a valve shaft actuating a valve body is provided in such a manner as to pass through a housing forming a flow path, it is necessary to provide a sealing device between both the elements, in order to prevent a fluid from leaking from the flow path through a gap between a valve shaft insertion hole provided in the housing and the valve shaft inserted to the valve shaft insertion hole.

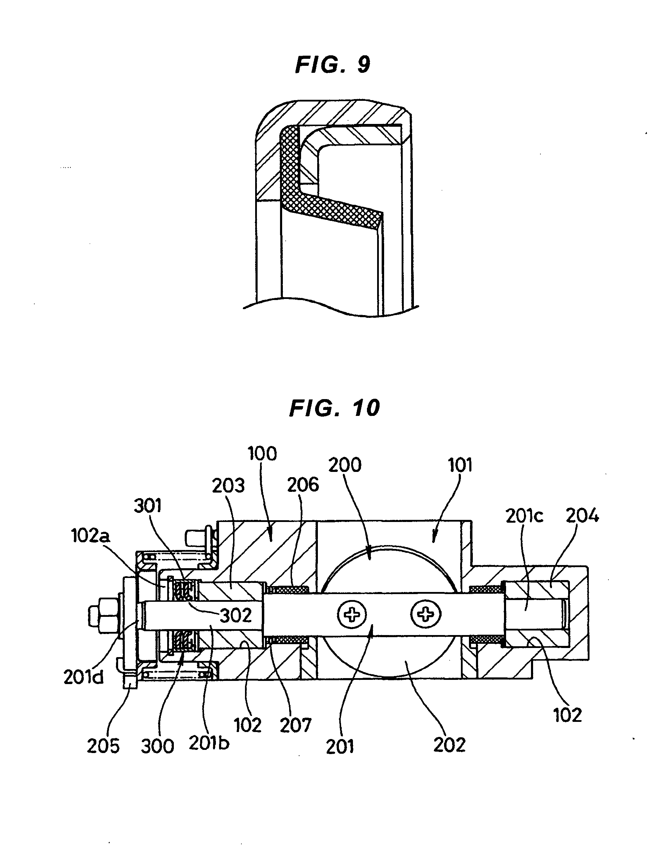

Fig. 10 is an explanatory view showing a conventional sealing device together with a valve assembly of the EGR system. The valve assembly is provided with a housing 100 having a flow path 101 connecting an exhaust manifold and an intake manifold which are not illustrated, and a butterfly valve 200 regulating a flow path cross sectional area of the flow path 101.

The butterfly valve 200 is provided with a valve shaft 201 which is provided in the housing 100 in a direction orthogonal to a center line of the flow path 101, and is inserted to a valve shaft insertion hole 102 in which one end is closed, bearings 203 and 204 which rotatably support small-diameter portions 201b and 201c in the vicinity of both ends of the valve shaft 201 to the valve shaft insertion hole 102 at both sides of the flow path 101, and a disc-shaped valve body 202 which is arranged within the flow path 101 and is mounted to the valve shaft 201. Further, a lever 205 attached to an outer end 201d of the valve shaft 201 protruding to an outer portion of the housing 100 from an open end 102a of the valve shaft insertion hole 102 receives driving force from a motor which is not illustrated, whereby the valve shaft 201 rotates around an axis thereof within an appropriate angle range. Accordingly, the disc-shaped valve body 202 is actuated so as to change a flow path cross sectional area of the flow path 101.

A sealing device 300 is provided between the valve shaft insertion hole 102 and the valve shaft 201 in an inner periphery thereof. The sealing device 300 is provided with a metal ring 301 which is pressure inserted and fixed to the valve shaft insertion hole 102, and a seal lip 302 which is retained by the metal ring 301 and has an inner diameter portion directed toward the flow path 101 side and slidably brought into close contact with an outer peripheral surface of the valve shaft 201. Further, since an inner side of the flow path 101 comes to be under an environment in which condensed water having a high temperature of 200 °C and a strong acidity is generated by an exhaust gas, the sealing device 300 is provided outside the bearing 203, that is, at a position which is sufficiently away from the flow path 101, and the seal lip 302 employs a polytetrafluoroethylene (PTFE) (refer, for example, to patent document 1).

### Prior Art Document

### Patent Document

Patent Document 1: Japanese Unexamined Patent Publication No. 2007-32301
However, since the conventional sealing device 300 is arranged outside the bearing 203, there is a risk that soot, condensed water, unburned matters or the like included in the exhaust gas flowing within the flow path 101 makes an intrusion into the bearing 203. Accordingly, a wire filter 206 and a labyrinth seal 207 are interposed between the bearing 203 and the flow path 101. However, it is hard to completely shut off the intrusion of the soot, the condensed water, the unburned matters or the like by the wire filter 206 and the labyrinth seal 207.

JP 2007 032301 A discloses a valve assembly provided with a housing having a gas passage and a valve shaft hole. A butterfly valve having a valve shaft is inserted through the valve shaft hole. A valve shaft end part is held by ring members. JP 2007 032301 A discloses the features of the preamble of claim 1.

US 2007/017491 A1 discloses an exhaust gas recirculation device. An EGR-valve comprises a housing, a butterfly valve and a valve shaft. The valve shaft 5 comprises a sealant.

DE 10 2008 013105 A1 discloses a flow valve. At a bearing, in a ringshaped space a ring is embedded in an elastic material. The number of elastic elements can be determined according to the intended application.

### SUMMARY OF THE INVENTION

### Object to be solved

The object of the present invention is to provide a sealing device and a method for mounting a sealing device, to improve a sealing performance, while maintaining a desired fastening margin with respect to a valve shaft by sealing an outer periphery of a valve shaft of a butterfly valve. Such a butterfly valve is used in an EGR system of a vehicle.

With respect to the sealing device, the object is solved by a sealing device having the features of claim 1. With respect to the method, the object is solved by a method having the features of claim 3. Further developments are stated in the dependent claims.

### Effect of the Invention

In accordance with the sealing device on the basis of claim 1 of the present invention, since the seal lip formed in the disc shape is forcibly deformed into the state in which the inner diameter portion is directed toward the flow path side by the valve shaft, a great initial fastening margin can be secured in spite that it is made of the fluorine contained resin, and a residual fastening margin becomes large even if it creeps by a high temperature condition. Therefore, even if it is mounted to a position close to the flow path in the valve shaft insertion hole, it is possible to maintain an excellent sealing performance over a long period.

In accordance with the mounting method of the sealing device on the basis of claim 13 of the present invention, it is possible to securely insert the valve shaft in the state in which the inner diameter portion of the seal lip formed in the disc shape is forcibly deformed in the direction toward the sealed side by the insertion of the jig. Accordingly, it is possible to securely achieve the effect obtained by claim 1 of the present invention.

### BRIEF EXPLANATION OF DRAWINGS

Fig. 1 is an explanatory view showing a sealing device in accordance with the present invention together with a valve assembly of an EGR system;
Fig. 2 is a one side sectional view showing the sealing device in accordance with the present invention by cutting along a plane passing through an axis thereof;
Fig. 3 is an explanatory view showing a state before a jig is inserted, in a mounting method of a sealing device in accordance with the present invention;
Fig. 4 is an explanatory view showing a inserting state of the jig, in the mounting method of the sealing device in accordance with the present invention;
Fig. 5 is an explanatory view showing a state in which a valve shaft is brought into contact with an end portion of the jig, in the mounting method of the sealing device in accordance with the present invention;
Fig. 6 is an explanatory view showing a process that a seal lip relatively moves to an outer periphery of the valve shaft from an outer periphery of the jig, in the mounting method of the sealing device in accordance with the present invention;
Fig. 7 is an explanatory view showing a state in which the valve shaft is inserted, in the mounting method of the sealing device in accordance with the present invention;
Fig. 8 is an explanatory view showing a result of a test to check variation with a passage of time of a fastening margin of the seal lip;
Fig. 9 is a one side sectional view showing a sealing device used as a comparative example for the test by cutting along a plane passing through an axis thereof; and
Fig. 10 is an explanatory view showing a conventional sealing device together with a valve assembly of an EGR system.

### Description of Reference Numerals

- 10: sealing device
- 11: outer ring (mounting ring)
- 12: inner ring (mounting ring)
- 13: seal lip
- 20: jig
- 20a: chamfer portion
- 100: housing
- 101: flow path
- 200: butterfly valve
- 201: valve shaft
- 201e: step portion
- 201f: chamfer portion
- 202: disc-shaped valve body

### DETALIED DESCRIPTOIN OF PREFERRED EMBODIMENT

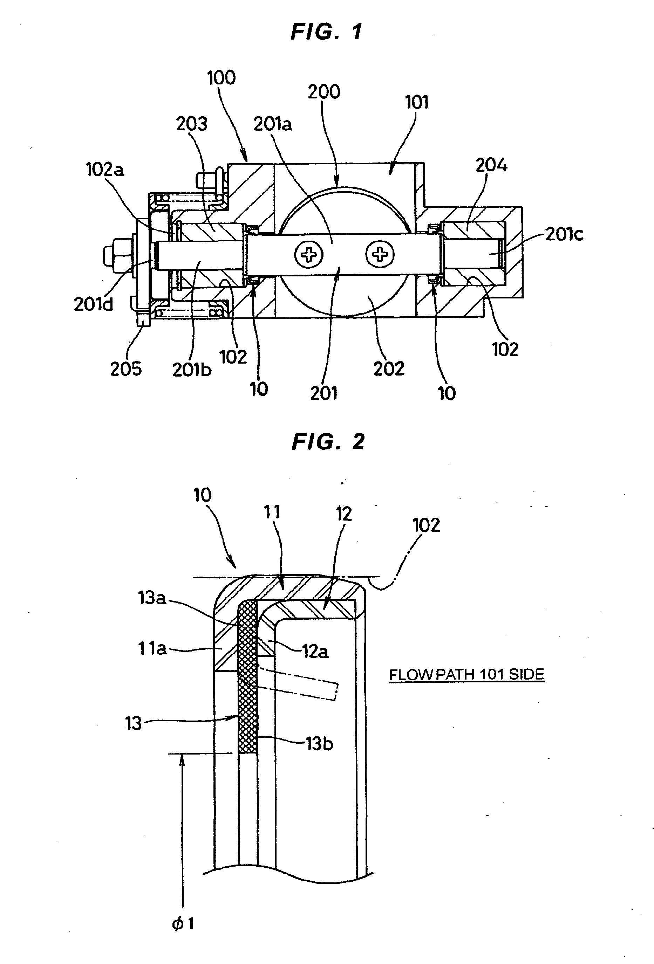

A description will be given below of a preferable embodiment in accordance with the present invention with reference to the accompanying drawings. Fig. 1 is an explanatory view showing a sealing device in accordance with the present invention together with a valve assembly of an EGR system, and Fig. 2 is a one side sectional view showing the sealing device in accordance with the present invention by cutting along a plane passing through an axis thereof.

The valve assembly shown in Fig. 1 is provided with a housing 100 having a flow path 101 connecting an exhaust manifold and an intake manifold which are not illustrated, and a butterfly valve 200 regulating a flow path cross sectional area of the flow path 101.

The butterfly valve 200 is provided with a valve shaft 201 which is provided in the housing 100 in a direction orthogonal to a center line of the flow path 101 and is inserted to a valve shaft insertion hole 102 in which one end is closed, bearings 203 and 204 which rotatably support the valve shaft 201 to the valve shaft insertion hole 102 at both sides of the flow path 101, and a disc-shaped valve body 202 which is arranged within the flow path 101 and is mounted to the valve shaft 201. The valve shaft 201 has a large diameter portion 201a in an intermediate in an axial direction to which the disc-shaped valve body 202 is mounted, and small diameter portions 201b and 201c at both sides thereof, and the bearings 203 and 204 support outer peripheries of the small diameter portions 201b and 201c in a state of a displacement in an axial direction of the valve shaft 201 being regulated by contact with step portions between the large diameter portion 201a and the small diameter portion 201b and between the large diameter portion 201a and the small diameter portion 201c.

Further, the butterfly valve 200 is structured such that a lever 205 is mounted to an outer end 201d of the valve shaft 201 protruding to an outer portion of the housing 100 from an open end 102a of the valve shaft insertion hole 102, and the valve shaft 201 rotates in an appropriate angle range around an axis thereof by receiving driving force from a motor (not shown) via the lever 205, whereby the disc-shaped valve body 202 operates so as to change a flow path cross sectional area of the flow path 101.

The sealing devices 10 in accordance with the present invention are arranged at end portions close to the flow path 101 of the bearings 203 and 204.

For detail, the sealing device 10 is provided with an outer ring 11 which is pressure inserted and fixed to the valve shaft insertion hole 102 of the housing 100 and is made of a metal (for example, a stainless steel plate), an inner ring 12 which is caulked and fixed to an inner periphery of the outer ring 11 and is made of a metal (for example, a stainless steel plate), and a seal lip 13 in which an outer diameter portion 13a is retained between inward collar portions 11a and 12a which are formed in the outer ring 11 and the inner ring 12 so as to face to each other in an axial direction, as shown in Fig. 2. In this case, the outer ring 11 and the inner ring 12 correspond to the mounting rings described in claim 1.

The seal lip 13 is formed with a polytetrafluoroethylene (PTFE) corresponding to a fluorine contained resin, which is excellent in a heat resistance and an acid resistance, in a disc shape by cutting or the like, and an inner diameter ø 1 thereof is smaller than an outer diameter of the large diameter portion 201a of the valve shaft 201 shown in Fig. 1. Accordingly, when the valve shaft 201 is inserted, the inner diameter portion 13b is expanded and deformed into a state in which it is directed toward the flow path 101 side as shown by a one-dot chain line in Fig. 2, and is slidably brought into close contact with an outer peripheral surface of the large-diameter portion 201a of the valve shaft 201 in the so deformed state.

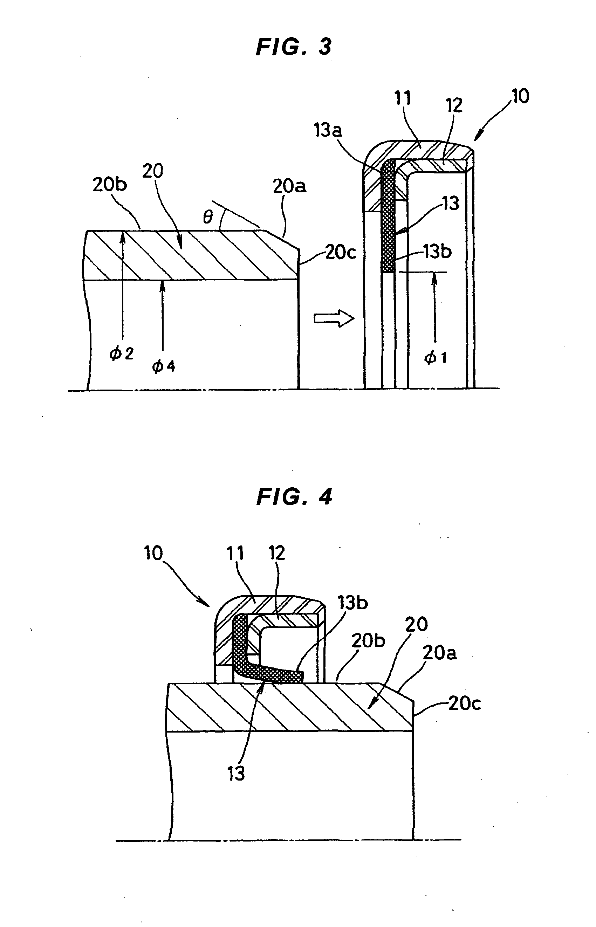

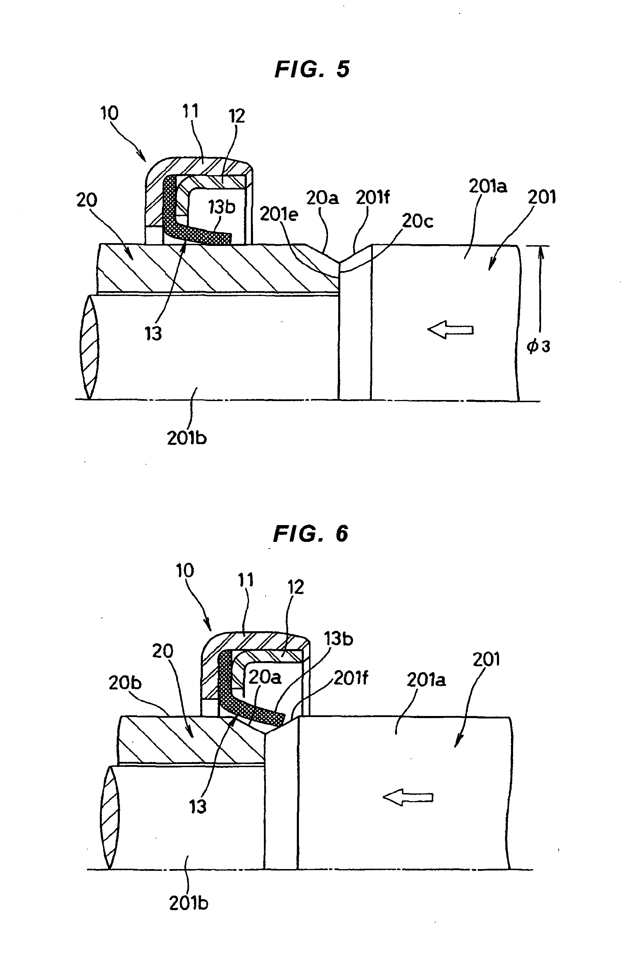

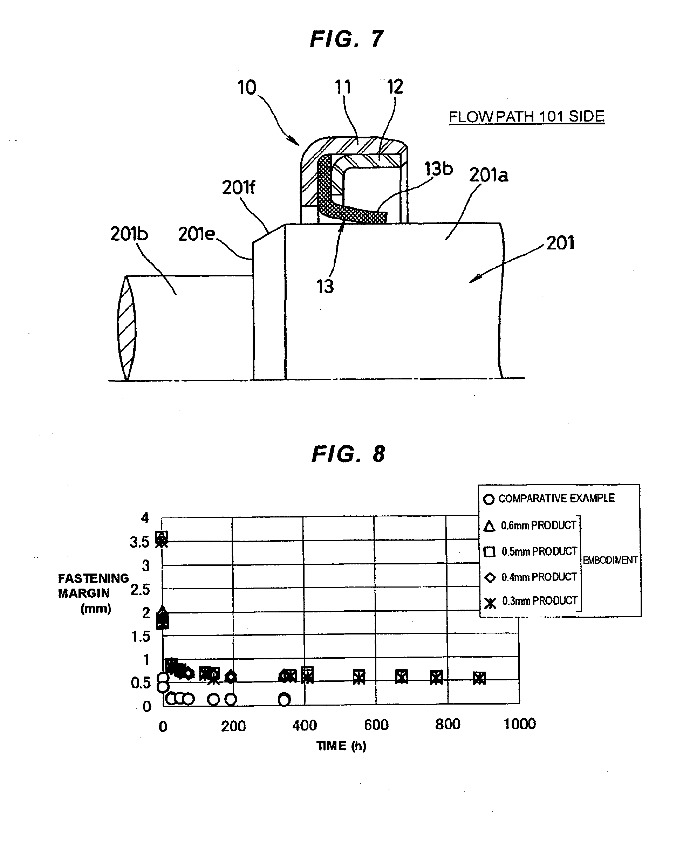

In this case, in the butterfly valve 200 as shown in Fig. 1, it is unavoidable to insert the valve shaft 201 to the inner periphery of the seal lip 13 from a right side (in a direction from the flow path 101 side) in Fig. 2, at a time of mounting the sealing device 10. However, when the valve shaft 201 is inserted in the direction mentioned above, it is impossible to forcibly deform the inner diameter portion 13b of the seal lip 13 into the state in which it is directed toward the flow path 101 side as shown in Fig. 2. Accordingly, in the present invention, the sealing device 10 is mounted in accordance with a method shown in Figs. 3 to 7, in order to forcibly deform the inner diameter portion 13b of the seal lip 13 into the state in which it is directed toward the flow path 101 side. Among them, Fig. 3 is an explanatory view showing a state before a jig is inserted, Fig. 4 is an explanatory view showing an inserting state of the jig, Fig. 5 is an explanatory view showing a state in which the valve shaft is brought into contact with an end portion of the jig, Fig. 6 is an explanatory view showing a process that the seal lip relatively moves to an outer periphery of the valve shaft from an outer periphery of the jig, and Fig. 7 is an explanatory view showing a state in which the valve shaft is inserted.

First of all, in Fig. 3, reference numeral 20 denotes a jig which is used in a mounting method of the present invention. This jig 20 is formed in a hollow cylindrical shape, and is structured such that an outer diameter φ 2 is approximately the same as an outer diameter φ 3 of the large diameter portion 201a of the valve shaft 201 shown in Fig. 5, accordingly is larger than the inner diameter φ 1 of the seal lip 13, and an inner diameter φ 4 is such a magnitude that the small diameter portion 201b at the outer end 201d side of the valve shaft 201 can be inserted.

In this case, the inner diameter φ 1 of the seal lip 13 is set such that an elongation at a time of inserting the large diameter portion 201a of the valve shaft 201, that is, an elongation determined by an expression (φ3 - φ1) / φ1 becomes less than a breaking elongation of the material (PTFE).

A chamfer portion 20a is formed in an outer diameter portion at a front end of the jig 20. The chamfer portion 20a is formed at such a magnitude as to be equal to or smaller than a chamfer portion 201f formed in an outer diameter portion at a step portion 201e between the large diameter portion 201a and the small diameter portion 201b in the valve shaft 201, as shown in Fig. 5.

In this case, it is preferable to set an angle θ of the chamfer portions 20a and 201f to about 30 to 45 degrees, and in order to make a resistance at a time of passing through the inner periphery of the seal lip 13 small, it is preferable to work corner portions at the large diameter side and the small diameter side of the chamfer portions 20a and 201f to be round surfaces.

For the mounting of the sealing device 10, in an inserting work of the large diameter portion 201a of the valve shaft 201 to the inner periphery of the seal lip 13, first of all, as shown in Fig. 3, the jig 20 is inserted toward the inner periphery of the seal lip 13 as shown by an arrow from the side opposite to the sealed side (in a direction from an opposite side to the flow path 101 in the mounted state shown in Fig. 1) of the sealing device 10, that is, from a left side in Fig. 3, while a front end portion 20c, in which the chamfer portion 20a is formed, is placed ahead. As is described previously, since the outer diameter φ 2 of the jig 20 is larger than the inner diameter φ 1 of the seal lip 13, the inner diameter portion 13b of the seal lip 13 relatively runs on the outer peripheral surface 20b from the chamfer portion 20a of the jig 20 while being forcibly expanded and deformed so as to be directed in an inserting direction of the jig 20, as shown in Fig. 4.

Next, as shown in Fig. 5, after the step portion 201e between the small diameter portion 201b and the large diameter portion 201a of the valve shaft 201 is concentrically brought into contact with the front end portion 20c of the jig 20 by inserting the small diameter portion 201b of the valve shaft 201 to the inner peripheral hole of the jig 20 from the front end portion 20c side of the jig 20, the valve shaft 201 and the jig 20 are moved in such a manner that the jig 20 is pushed back in an opposite direction to the inserting direction of the jig 20 (toward a left side in the drawing) under this state. Accordingly, the inner diameter portion 13b of the seal lip 13 is slid toward the front end portion 20c side on the outer peripheral surface 20b of the jig 20, while maintaining a state in which it is directed in the inserting direction of the jig 20 (toward a right side in the drawing).

In this moving process, as shown in Fig. 6, when the contact portion between the jig 20 and the step portion 201e of the valve shaft 201 passes through the inner periphery of the seal lip 13, the inner diameter portion 13b of the seal lip 13 temporarily drops into the chamfer portion 20a at the outer diameter portion of the front end of the jig 20, and thereafter runs relatively on the outer peripheral surface of the large diameter portion 201a from the chamfer portion 201f of the valve shaft 201 while maintaining the state in which it is directed toward a right side in the drawing.

Accordingly, the sealing device 10 can be mounted to the outer periphery of the large diameter portion 201a of the valve shaft 201, as shown in Fig. 7, in a state in which the inner diameter portion 13b of the seal lip 13 is directed coming toward the flow path 101 side.

In accordance with the sealing device 10 mounted to the valve assembly as shown in Fig. 1 by the method mentioned above, since the seal lip 13 is formed in the disc shape, and the inner diameter portion 13b is forcibly deformed into the state in which it is directed toward the flow path 101 side by the insertion of the large diameter portion 201a of the valve shaft 201, a great initial fastening margin can be secured in spite that it is made of the PTFE, and a great residual fastening margin can be maintained even if it creeps by being exposed to such a high temperature as about 200 °C caused by the exhaust gas flowing within the flow path 101. Therefore, in spite of being arranged in the valve shaft insertion hole 102 so as to be positioned closer to the flow path 101 than the bearing 203, it is possible to maintain an excellent sealing performance over a long period. Accordingly, it is possible to effectively prevent soot, condensed water, unburned matters or the like included in the exhaust gas within the flow path 101 from making an intrusion into the bearing 203.

Fig. 8 is an explanatory view showing a result of a test to check variation with the passage of time of the fastening margin of the seal lip, and Fig. 9 is a one side sectional view showing a sealing device used as a comparative example for the test by cutting along a plane passing through an axis thereof.

The test uses two each of four kinds of sealing devices in which a thickness of the seal lip is 0.3 mm, 0.4 mm, 0.5 mm and 0.6 mm as the embodiments of the present invention, and sealing devices in which the seal lip is formed in a bent shape shown in Fig. 9 by cutting as the comparative examples, and the variation with the passage of time of the fastening margin of the seal lip made of the PTFE is measured under a temperature condition of 200 °C.

As is apparent from the test result shown in Fig. 8, it is confirmed that the initial fastening margin of the sealing device in accordance with the comparative example is low and the fastening margin is lowered in an early stage, while the initial fastening margin of the sealing device in accordance with the embodiment of the present invention is high, and the higher fastening margin than the initial fastening margin of the comparative example is maintained over a long period thereafter. Further, it is confirmed that approximately the same initial fastening margin and variation with the passage of time are exhibited in each of the embodiments regardless of the thickness of the seal lip.

## Claims

1. A sealing device (10) for sealing between a valve shaft (201) which actuates a disc-shaped valve body (202) arranged within a flow path (101) in an inner periphery of a housing so as to open and close, and a valve shaft insertion hole (102) which is provided in said housing in a direction orthogonal to a center line of said flow path (101) and to which said valve shaft (201) is inserted, wherein the sealing device (10), in use, is arranged closer to said flow path (101) than a bearing (203, 204) rotatably supporting said valve shaft (201) to said valve shaft insertion hole (102),
the sealing device (10) is provided with a seal lip (13) which is retained by mounting rings (11, 12) pressure inserted and fixed, in use, to said valve shaft insertion hole (102) and is slidably brought into close contact with an outer peripheral surface of said valve shaft (201), and the seal lip (13) is formed in a disc shape with a fluorine contained resin, and is forcibly deformed into a state in which an inner diameter portion (13b) is directed toward said flow path (101) side by said valve shaft. (201);
**characterized in that**
the sealing device (10) is provided with
an outer mounting ring (11) having an inward collar portion (11a)
and an inner mounting ring (12) having an inward collar portion (12a) said inner mounting ring (12) being fixed to an inner periphery of the outer mounting ring (11), and
the seal lip (13) is retained between the inward collar portion (11a) of the outer ring (11) and the inward collar portion (12a) of the inner ring (12).

2. Valve assembly comprising
a sealing device (10) according to claim 1,
a valve shaft (201) which actuates a disc-shaped valve body (202) arranged within a flow path (101) in an inner periphery of a housing so as to open and close, and
a valve shaft insertion hole (102) which is provided in said housing in a direction orthogonal to a center line of said flow path (101) and to which said valve shaft (201) is inserted,
wherein the sealing device (10) is arranged closer to said flow path (101) than a bearing (203, 204) rotatably supporting said valve shaft (201) to said valve shaft insertion hole (102),

3. A method of mounting the sealing device (10) according to claim 1, comprising the steps of:
retaining the seal lip (13) between the inward collar portion (11a) of the outer ring (11) and the inward collar portion (12a) of the inner ring (12);
inserting a cylindrical or columnar jig (20) having an outer diameter which is approximately equal to an outer diameter of a valve shaft (201) and is appropriately larger than an inner diameter of the seal lip (13), to an inner periphery of said seal lip (13) from a side opposite to a sealed side of the sealing device (10), at a time of inserting a valve shaft (201) actuating a disc-shaped valve body (202) so as to open and close to the inner periphery of said seal lip (13) of the sealing device (10) provided with the seal lip (13) which is formed in a disc shape with a fluorine contained resin, thereby forcibly deforming an inner diameter portion (13b) of the seal lip (13) in an inserting direction of said jig (20); and
thereafter inserting said valve shaft (201) to the inner periphery of said seal lip (13) in the direction opposite to the inserting direction of said jig (20), in a state in which an end portion or a step portion directed toward the end portion side is concentrically brought into contact with the end portion of said jig (20), thereby maintaining a state in which the inner diameter portion (13b) of said seal lip (13) is directed in a direction toward a sealed side.

## Patentansprüche

1. Abdichtvorrichtung (10) zum Abdichten zwischen einer Ventilwelle (201), die einen scheibenförmigen Ventilkörper (202), der innerhalb einer Strömungsbahn (101) an einem Innenumfang eines Gehäuses angeordnet ist, so betätigt, dass er öffnet und schließt, und einem Ventilwelleneinführloch (102), das in dem Gehäuse in einer Richtung senkrecht zu einer Mittellinie der Strömungsbahn (101) vorgesehen ist, und in das die Ventilwelle (201) eingeführt ist, wobei die Abdichtvorrichtung (10) in Anwendung näher zu der Strömungsbahn (101) als ein Lager (203, 204) angeordnet ist, das die Ventilwelle (201) drehbar an dem Ventilwelleneinführloch (102) stützt,
wobei die Abdichtvorrichtung (10) mit einer Dichtlippe (13) versehen ist, die durch Montageringe (11, 12) gehalten wird, die zu dem Ventilwelleneinführloch (102) per Druck eingeführt und in Anwendung fixiert sind, und die in einem engen Kontakt mit einer Außenumfangsfläche der Ventilwelle (201) gleitfähig gebracht ist, und wobei die Dichtlippe (13) in einer Scheibenform mit einem Fluor enthaltenen Harz ausgebildet ist, und zwangsweise in einem Zustand verformt ist, bei dem ein Innendurchmesserabschnitt (13b) zu der Seite der Strömungsbahn (101) durch die Ventilwelle (201) gerichtet ist;
**dadurch gekennzeichnet, dass**
die Abdichtvorrichtung (10) versehen ist mit
einem äußeren Montagering (11), der einen nach innen gerichteten Kragenabschnitt (11a) hat,
einem inneren Montagering (12), der einen nach innen gerichteten Kragenabschnitt (12a) hat, wobei der innere Montagering (12) an einem Innenumfang des äußeren Montagerings (11) fixiert ist, und
wobei die Dichtlippe (13) zwischen dem nach innen gerichteten Kragenabschnitt (11a) des äußeren Rings (11) und dem nach innen gerichteten Kragenabschnitt (12a) des inneren Rings (12) gehalten ist.

2. Ventilbaugruppe mit:
einer Abdichtvorrichtung (10) gemäß Anspruch 1,
einer Ventilwelle (201), die einen scheibenförmigen Ventilkörper (202), der innerhalb einer Strömungsbahn (101) an einem Innenumfang eines Gehäuses angeordnet ist, so betätigt, dass er öffnet und schließt, und
einem Ventilwelleneinführloch (102), das in dem Gehäuse in einer Richtung senkrecht zu einer Mittellinie der Strömungsbahn (101) vorgesehen ist, und in das die Ventilwelle (201) eingeführt ist,
wobei die Abdichtvorrichtung (10) näher zu der Strömungsbahn (101) als ein Lager (203, 204) angeordnet ist, das die Ventilwelle (201) an dem Ventilwelleneinführloch (102) drehbar stützt.

3. Verfahren zum Montieren der Abdichtvorrichtung (10) gemäß Anspruch 1, mit den folgenden Schritten:
Halten der Dichtlippe (13) zwischen dem nach innen gerichteten Kragenabschnitt (11a) des äußeren Rings (11) und dem nach innen gerichteten Kragenabschnitt (12a) des inneren Rings (12);
Einführen einer zylindrischen oder säulenartigen Montageeinrichtung (20) mit einem Außendurchmesser, der ungefähr gleich einem Außendurchmesser einer Ventilwelle (201) ist und geeignet größer als ein Innendurchmesser der Dichtlippe (13) ist, zu einem Innenumfang der Dichtlippe (13) von einer Seite, die zu einer abgedichteten Seite der Abdichtvorrichtung (10) entgegengesetzt ist, zu einem Zeitpunkt des Einführens einer Ventilwelle (201), die einen scheibenförmigen Ventilkörper (202) so betätigt, dass er öffnet und schließt, zu dem Innenumfang der Dichtlippe (13) der Abdichtvorrichtung (10), die mit der Dichtlippe (13) versehen ist, die in einer Scheibenform mit einem Fluor enthaltenen Harz ausgebildet ist, wodurch zwangsweise ein Innendurchmesserabschnitt (13b) der Dichtlippe (13) in einer Einführrichtung der Montageeinrichtung (20) verformt wird; und
danach erfolgendes Einführen der Ventilwelle (201) zu dem Innenumfang der Dichtlippe (13) in der Richtung, die zu der Einführrichtung der Montageeinrichtung (20) entgegengesetzt ist, in einem Zustand, bei dem ein Endabschnitt oder ein Absatzabschnitt, der zu der Seite des Endabschnittes gerichtet ist, konzentrisch zu einem Kontakt mit dem Endabschnitt der Montageeinrichtung (20) gebracht worden ist, wodurch ein Zustand beibehalten wird, bei dem der Innendurchmesserabschnitt (13b) der Dichtlippe (13) in einer Richtung zu einer abgedichteten Seite hin gerichtet ist.

## Revendications

1. Dispositif d'étanchéité (10) permettant d'assurer l'étanchéité entre une tige de soupape (201) qui actionne un corps de soupape en forme de disque (202) agencé à l'intérieur d'un trajet d'écoulement (101) dans une périphérie interne d'un boîtier de manière à s'ouvrir et se fermer, et un trou d'insertion de tige de soupape (102) qui est prévu dans ledit boîtier dans une direction orthogonale à une ligne centrale dudit trajet d'écoulement (101) et dans lequel ladite tige de soupape (201) est insérée, où le dispositif d'étanchéité (10), en cours d'utilisation, est agencé plus proche dudit trajet d'écoulement (101) qu'un palier (203, 204) supportant en rotation ladite tige de soupape (201) dans ledit trou d'insertion de tige de soupape (102),
le dispositif d'étanchéité (10) est doté d'une lèvre d'étanchéité (13) qui est retenue par des anneaux de montage (11, 12) insérés et fixés par pression, en cours d'utilisation, audit trou d'insertion de tige de soupape (102) et est amenée par coulissement en contact étroit avec une surface périphérique externe de ladite tige de soupape (201), et la lèvre d'étanchéité (13) présente la forme d'un disque avec une résine contenant du fluor, et est déformée de manière forcée dans un état dans lequel une partie de diamètre interne (13b) est dirigée vers ledit côté de trajet d'écoulement (101) par ladite tige de soupape (201) ;
**caractérisé en ce que**
le dispositif d'étanchéité (10) est doté :
d'un anneau de montage externe (11) ayant une partie de collier intérieure (11a)
d'un anneau de montage interne (12) ayant une partie de collier intérieure (12a), ledit anneau de montage interne (12) étant fixé à une périphérie interne de l'anneau de montage externe (11), et
la lèvre d'étanchéité (13) est retenue entre la partie de collier intérieure (11a) de l'anneau externe (11) et la partie de collier intérieure (12a) de l'anneau interne (12).

2. Ensemble de soupape comprenant :
un dispositif d'étanchéité (10) selon la revendication 1,
une tige de soupape (201) qui actionne un corps de soupape en forme de disque (202) agencé à l'intérieur d'un trajet d'écoulement (101) dans une périphérie interne d'un boîtier de manière à s'ouvrir et se fermer, et
un trou d'insertion de tige de soupape (102) qui est prévu dans ledit boîtier dans une direction orthogonale à une ligne centrale dudit trajet d'écoulement (101) et dans lequel ladite tige de soupape (201) est insérée,
dans lequel le dispositif d'étanchéité (10) est agencé plus proche dudit trajet d'écoulement (101) qu'un pallier (203, 204) supportant en rotation ladite tige de soupape (201) dans ledit trou d'insertion de tige de soupape (102),

3. Procédé de montage du dispositif d'étanchéité (10) selon la revendication 1, comprenant les étapes consistant :
à retenir la lèvre d'étanchéité (13) entre la partie de collier intérieure (11a) de l'anneau externe (11) et la partie de collier intérieure (12a) de l'anneau interne (12) ;
à insérer un gabarit de montage cylindrique ou colonnaire (20) ayant un diamètre externe qui est approximativement égal à un diamètre externe d'une tige de soupape (201) et est supérieur de manière appropriée à un diamètre interne de la lèvre d'étanchéité (13), dans une périphérie interne de ladite lèvre d'étanchéité (13) à partir d'un côté opposé à un côté étanche du dispositif d'étanchéité (10), à un moment d'insertion d'une tige de soupape (201) actionnant un corps de soupape en forme de disque (202) de manière à s'ouvrir et se fermer à la périphérie interne de ladite lèvre d'étanchéité (13) du dispositif d'étanchéité (10) doté de la lèvre d'étanchéité (13) qui présente la forme d'un disque avec une résine contenant du fluor, ce qui permet de déformer de manière forcée une partie de diamètre interne (13b) de la lèvre d'étanchéité (13) dans une direction d'insertion dudit gabarit de montage (20) ; et
à insérer par la suite ladite tige de soupape (201) dans la périphérie interne de ladite lèvre d'étanchéité (13) dans la direction opposée à la direction d'insertion dudit gabarit de montage (20), dans un état dans lequel une partie d'extrémité ou une partie gradin dirigée vers le côté de partie d'extrémité est mise en contact de manière concentrique avec la partie d'extrémité dudit gabarit de montage (20), ce qui permet de maintenir un état dans lequel la partie de diamètre interne (13B) de ladite lèvre d'étanchéité (13) est dirigée dans une direction vers un côté étanche.
